# EUROPÄISCHE PATENTSCHRIFT

(11) **EP 2 396 204 B1**
(45) Veröffentlichungstag und Bekanntmachung des Hinweises auf die Patenterteilung: **12.06.2013**
(21) Anmeldenummer: 10709681.0
(22) Anmeldetag: 10.02.2010
(51) Int. Cl.: B60T 13/26

(54) **DRUCKLUFTVERSORGUNGSSYTEM FÜR LASTKRAFTWAGENANHÄNGER UND DRUCKLUFTVERSORGUNGSVERFAHREN**
COMPRESSED AIR SUPPLY SYSTEM FOR TRUCK TRAILERS AND COMPRESSED AIR SUPPLY METHOD
SYSTÈME D'ALIMENTATION EN AIR COMPRIMÉ POUR REMORQUE DE CAMION, ET PROCÉDÉ D'ALIMENTATION EN AIR COMPRIMÉ

(30) Priorität: 11.02.2009 DE 102009008351
(43) Veröffentlichungstag der Anmeldung: 21.12.2011
(73) Patentinhaber: Knorr-Bremse Systeme für Nutzfahrzeuge GmbH, 80809 München (DE)
(72) Erfinder: STÖHR, Markus, 70567 Stuttgart (DE); MEDERER, Martin, 92318 Neumarkt (DE)
(74) Vertreter: Mattusch, Gundula
(86) Internationale Anmeldenummer: PCT/EP2010/000812
(87) Internationale Veröffentlichungsnummer: WO 2010/091843

(56) Entgegenhaltungen:
- WO-A1-00/30912
- GB-A- 1 502 377
- GB-A- 1 521 525
- US-A- 5 615 931
- US-A1- 2005 000 615
- US-B1- 6 269 691

## Beschreibung

Die Erfindung betrifft ein Druckluftversorgungssystem für Lastkraftwagenanhänger und ein Druckluftversorgungsverfahren. Derartige Druckluftversorgungssysteme weisen zumindest ein erstes Druckluftnetz, das eine pneumatische Bremsanlage des Lastkraftwagenanhängers mit einem gemäß EU-weiter gesetzlicher Bestimmungen begrenzten Luftdruck versorgt, auf. Ferner weisen derartige Druckluftversorgungssysteme für Lastkraftwagenanhänger mindestens eine Druckluftversorgungskupplung zwischen Zugfahrzeug und dem Lastkraftwagenanhänger zur Druckluftversorgung auf.

Aufgrund des begrenzten Luftdrucks, der über eine Druckluftkupplung dem Lastkraftwagenanhänger für eine pneumatische Bremsanlage aufgrund EU-weiter gesetzlicher Bestimmungen einzuhalten ist, können mit derartigen Druckluftkupplungen beispielsweise automatische Reifendruckregelungssysteme für den Lastkraftwagenanhänger nicht versorgt werden. Reifendruckregelsysteme erfordern nämlich einen deutlich höheren Luftdruck, zumal ein Reifendruckregelsystem die Aufgabe hat, einen optimalen Reifendruck während der Fahrt in Abhängigkeit von der Straßenbeschaffenheit, der Fahrzeuggeschwindigkeit, der Fahrzeugbeladung, der Außentemperatur und der extrapolierten Reifen- und Fahrbahntemperaturen auch während der Fahrt durch Erhöhen oder Vermindern des Reifendrucks in den rotierenden Rädern optimal einzustellen.

Bekannte Reifendruckventile setzen voraus, dass bei stehendem Fahrzeug der Reifendruck den entsprechenden Umweltbedingungen angepasst wird. Das bedeutet, dass das Fahrzeug die Fahrt zu unterbrechen hat und die Reifen einzeln vom Fahrzeugführer manuell einem optimalen Reifendruck anzupassen sind. Dazu werden bisher entsprechende Servicestationen angefahren, die über entsprechende stationäre Hochdruckanlagen verfügen, um den Bedarf an Druckluft unter hohem Druck zur Verfügung zu stellen.

Um die Forderung, auch während der Fahrt den Reifendruck zu regulieren, zu erfüllen, sind nicht nur besondere Reifendrucksteuerventile erforderlich, sondern ist auch eine entsprechende Hochdruckversorgung des Fahrzeuganhängers notwendig, um den Fahrzeuganhänger mit entsprechender Druckenergie zu versorgen.

Aus der Druckschrift US 6,269,691 B1 ist deshalb ein automatisches Reifendruckversorgungssystem mit einer Booster-Pumpe bekannt, die von einer Druckluftversorgung mit begrenztem Luftdruck über die zulässige Druckluftkupplung des Lastkraftwagenanhängers angetrieben wird. Die Booster-Pumpe verbraucht Druckluftvolumen des begrenzten Luftdrucks, um Druckluft in einen höheren Ausgangsdruck für ein Reifendruckregelsystem zu transformieren, da die Reifen einen höheren Luftdruck erfordern, als es ein erstes Druckluftnetz zur Versorgung des Bremssystems von Lastkraftwagenanhängern zulässt. Für ein derartiges bekanntes Reifendruckversorgungs- bzw. Regelsystem mit zusätzlicher Booster-Pumpe sind zusätzlich ein Druckstoßschutzventil und ein Überdruckventil in dem System vorgesehen, um einen reibungslosen Betrieb des Druckluftversorgungssystems für den Lastkraftwagenanhänger zu gewährleisten.

Ein derartiges Druckluftversorgungssystem hat den Nachteil, dass in dem Anhänger ein Zusatzkompressor mit entsprechenden zusätzlichen Schutz- und Überdruckventilen vorzusehen ist, der den höheren Druck beispielsweise für ein Reifendruckregelsystem zur Verfügung stellt und ein entsprechendes zweites Hochdrucknetz im Lastkraftwagenanhänger mit entsprechendem höheren Luftdruck versorgt.

In der gattungsgemäβen Druckschrift GB 1 502 377 ist eine Vorrichtung offenbart, die mehrere Bremskreise aufweist, um Luft mit hohem Druck bereitzustellen. Dabei weist die Vorrichtung Bremskreise mit unterschiedlichen Drücken, Behälter zum Speichern von Hochdruckluft und Sicherheitsventile auf.

Die Druckschrift US 2005/0000615 A1 offenbart eine zentrale Aufblasvorrichtung eines Reifens mit einer rotierenden Vorrichtung. Die Vorrichtung ermöglicht ein automatisches Aufblasen eines pneumatischen Reifens bei bewegten Fahrzeugen, wie zum Beispiel einem Traktor.

In der Druckschrift US 5 615 931 ist eine Vorrichtung offenbart, die Daten für eine lastabhängige Steuerung und Regelung eines Bremssystems ermittelt.

Während in der Druckschrift US 6, 269, 691, B1 eine Vorrichtung offenbart ist, die ein automatisches Aufpumpen eines Reifens ermöglicht.

Aufgabe der Erfindung ist es, eine verbesserte Druckluftversorgung eines Lastkraftwagenanhängers zur Verfügung zu stellen, um nicht nur das Lastkraftwagenanhängerbremssystem, sondern auch andere pneumatische Verbraucher mit geeignetem höheren Luftdruck im Lastkraftwagenanhänger zu versorgen.

Diese Aufgabe wird mit den unabhängigen Ansprüchen gelöst. Vorteilhafte Weiterbildungen der Erfindung ergeben sich aus den abhängigen Ansprüchen.

Erfindungsgemäß wird ein Druckluftversorgungssystem für Lastkraftwagenanhänger und ein Druckluftversorgungsverfahren geschaffen. Das Druckluftversorgungssystem versorgt zumindest ein erstes Druckluftnetz, das eine pneumatische Bremsanlage des Lastkraftwagenanhängers mit einem gemäß EU-weiter gesetzlicher Bestimmungen begrenzten Luftdruck für Lastkraftwagenanhänger aufweist. Ferner verfügt das Druckluftversorgungssystem über mindestens eine Druckluftversorgungskupplung zwischen Zugfahrzeug und dem Lastkraftwagenanhänger zur Druckluftversorgung. Die mindestens eine Druckluftversorgungskupplung ist für einen höheren Luftdruck ausgelegt als der begrenzte Luftdruck gemäß der EU-weiten gesetzlichen Bestimmungen.

Ein derartiges Druckluftversorgungssystem hat den Vorteil, dass zusätzlich zu einer Druckluftleitung bzw. einem Druckluftnetz für das Bremssystem ein weiteres Versorgungsnetz für den Lastkraftwagenanhänger mit Luftdruck versorgt werden kann, an das Reifendruckkontrollsysteme oder auch Luftfederungs- und Dämpfungssysteme angeschlossen sein können. Damit ergibt sich eine bessere Versorgungsleistung, da kein Luftverbrauch aus dem ersten Druckluftnetz für den Bremsluftkreis verbraucht wird, um einen Booster oder Kompressor im Lastkraftwagenanhänger zu versorgen. Ein luftdruckbetriebener Booster verbraucht nämlich einen großen Bereich der Füllleistung des Bremsenluftdrucksystems zum Antrieb des Boosters bzw. Kompressors. Ferner entfallen die Kosten für einen derartigen Booster mit seinen entsprechenden Schutz- und Überdruckventilen. Darüber hinaus hat eine derartige verbesserte Druckluftversorgungskupplung den Vorteil, dass Reifendruckkontrollsysteme von einem zweiten Druckluftnetz mit einem höheren Luftdruck versorgt werden können. Ferner ist es möglich aufgrund des erhöhten Luftdrucks in einem derartigen zweiten Druckluftnetz, die Luftfederungskomponenten wie Druckluftfedern und pneumatische Stoßdämpfer mit räumlich kleineren und weniger kostenintensiven Federbälgen auszurüsten.

Vorzugsweise ist der begrenzte Luftdruck für Lastkraftwagenanhänger auf 8,5 bar bzw. 0,85 ·Megapascal (MPa) festgelegt und die mindestens eine Druckluftversorgungskupplung für den höheren Luftdruck ist für einen Luftdruck von bis zu 1,5 MPa, vorzugsweise bis zu 1,2 MPa ausgelegt. Das hat den Vorteil, dass mit dem höhern Luftdruck in dem Lastkraftwagenanhänger ein zweites Druckluftnetz betrieben werden kann, an das vorzugsweise ein Reifendruckregelsystem und/oder ein pneumatisches Feder- und Dämpfungssystem angeschlossen sind.

Verfügt das Lastkraftfahrzeug über eine Zugmaschine und einen Lastkraftwagenanhänger mit lediglich einer einzigen Druckluftversorgungskupplung für einen höheren Luftdruck als dem EU-weiten zugelassenen Luftdruck, so ist es in vorteilhafter Weise möglich, das erste Druckluftnetz des Lastkraftwagenanhängers für das Bremssystem aus dem zweiten Druckluftnetz über ein entsprechendes Druckregelventil zu versorgen. Das hat den Vorteil, dass für das Kopplungssystem zwischen Zugfahrzeug und Lastkraftwagenanhänger lediglich eine einzige Druckluftversorgungskupplung erforderlich ist.

Andererseits ist es auch möglich, zwischen dem Zugfahrzeug und dem Lastkraftwagenanhänger eine erste Druckluftkupplung mit einer ersten Luftdruckbegrenzung zur Versorgung des ersten Druckluftnetzes des Lastkraftwagenanhängers und eine zweite Druckluftkupplung mit einer zweiten höheren Luftdruckbegrenzung zur Versorgung des zweiten Druckluftnetzes des Lastkraftwagenanhängers vorzusehen. Da lediglich eine zusätzliche Druckluftkupplung für den Lastkraftwagenanhänger erforderlich ist, bildet auch diese Lösung eine gegenüber dem Stand der Technik preiswertere Möglichkeit, um zwei Druckluftnetze unterschiedlichen Luftdrucks in dem Lastkraftwagenanhänger mit entsprechendem Luftdruck zu versorgen.

In einer weiteren Ausführungsform der Erfindung weist der Lastkraftwagenanhänger für die Druckluftnetze mindestens einen Druckluftspeicher auf, der für den höheren Luftdruck ausgelegt ist als der begrenzte Luftdruck gemäß der EU-weiten Bestimmungen, wobei beide Druckluftnetze des Lastkraftwagenanhängers von und aus dem einen Druckluftspeicher versorgt werden, womit Raumbedarf und Gewicht in vorteilhafter Weise eingespart werden.

Darüber hinaus ist es vorgesehen, dass die Druckluftnetze des Lastkraftwagenanhängers mit einer zentralen Steuereinrichtung zusammenwirken. Diese Steuereinrichtung kann auf Druckverteilervorrichtungen einwirken, die für jedes der Druckluftnetze getrennt angeordnet sind oder in einer gemeinsamen Druckverteilervorrichtung vorgesehen werden. Derartige Druckverteilervorrichtungen stehen dann mit den Endverbrauchern wie Radbremsen, Radreifen oder Feder- und Dämpfungssystemkomponenten über entsprechende Druckluftleitungen und Ventile in Verbindung.

Ein Druckluftversorgungsverfahren für Lastkraftwagenanhänger weist die nachfolgenden Verfahrenschritte auf. Zunächst wird ein Luftdruck in dem Zugfahrzeug erzeugt, der höher ist als ein begrenzter Luftdruck gemäß EU-weiter gesetzlicher Bestimmungen für Lastkraftwagenanhänger. Dieser höhere Luftdruck wird dann über mindestens eine Druckluftversorgungskupplung, die für einen höheren Luftdruck als der begrenzte Luftdruck ausgelegt wird, zu den Druckluftnetzen des Lastkraftwagenanhängers überführt. Dann erfolgt ein Versorgen eines ersten Druckluftnetzes in dem Lastkraftwagenanhänger mit einem EU-weit zugelassenen Luftdruck und ein Versorgen eines zweiten Druckluftnetzes mit einem höheren Luftdruck über die mindestens eine Druckluftversorgungskupplung.

Um das erste Druckluftnetz zu versorgen, muss ein entsprechendes Druckreduzierungs- bzw. Druckregelventil als Verbindung zwischen dem zweiten und dem ersten Druckluftnetz vorgesehen werden. Dabei wird der begrenzte Luftdruck für Lastkraftwagenanhänger auf 8,5 bar bzw. 0,85 MPa begrenzt und die mindestens eine Druckluftversorgungskupplung wird für den höheren Luftdruck von bis zu 15 bar bzw. 1,5 MPa vorzugsweise bis zu 12 bar bzw. 1,2 MPa ausgelegt. Dadurch kann in dem Lastkraftwagenanhänger sowohl ein erstes Druckluftnetz mit dem EU-weit zugelassenen Luftdruck als auch ein zweites Druckluftnetz mit dem höheren Luftdruck versorgt werden.

Das zweite Druckluftnetz wird vorzugsweise für ein Reifendruckregelsystem eingesetzt, bei dem es darauf ankommt, den Reifendruck auch während der Fahrt optimal an die äußeren Bedingungen in Bezug auf Beladung, Straßenzustand, Außentemperatur u.a. anzupassen. Darüber hinaus ist es möglich, mit dem zweiten Druckluftnetz des Lastkraftwagenanhängers ein pneumatisches Feder- und Dämpfungssystem zu versorgen, dessen Komponenten mit deutlich geringerem Volumen ausgeführt sein können als es mit dem bisher zulässigen Druckluftsystem möglich ist. Dazu kann zwischen dem Zugfahrzeug und dem Lastkraftwagenanhänger eine erste Druckluftkupplung mit einer ersten Luftdruckbegrenzung zur Versorgung des ersten Druckluftnetzes des Lastkraftwagenanhängers und eine zweite Druckluftkupplung mit einer zweiten höheren Luftdruckbegrenzung zur Versorgung des zweiten Druckluftnetzes des Lastkraftwagenanhängers angeordnet werden.

Andererseits ist es auch möglich, dass das erste Druckluftnetz des Lastkraftwagenanhängers aus dem zweiten Druckluftnetz versorgt wird und eine einzige Druckluftversorgungskupplung, die für den höheren Luftdruck ausgelegt wird als der begrenzte Luftdruck gemäß der EU-weiten Bestimmungen, beide Druckluftnetze des Lastkraftwagenanhängers versorgt.

Darüber hinaus ist es von Vorteil, mindestens in einem Druckluftspeicher, der für den höheren Luftdruck ausgelegt wird als der begrenzte Luftdruck gemäß der EU-weiten Bestimmungen, Druckluft für die Druckluftnetze des Lastkraftwagenanhängers zu speichern und beide Druckluftnetze des Lastkraftwagenanhängers aus dem einen Druckluftspeicher zu versorgen. Dabei steuert eine zentrale Steuereinrichtung die Druckluftnetze des Lastkraftwagenanhängers, insbesondere entsprechende Druckverteilervorrichtungen, welche die Druckluft dann über Druckluftleitungen zu den einzelnen Verbrauchern wie Reifen, Bremsen oder Feder- und Dämpfungssystemkomponenten verteilt.

Die Erfindung wird nun anhand der beigefügten Figuren näher erläutert.
- Figur 1: zeigt eine Prinzipskizze eines Druckluftversorgungssystems gemäß einer ersten Ausführungsform der Erfindung;
- Figur 2: zeigt eine detaillierte Prinzipskizze eines Druckluftversorgungssystems gemäß einer zweiten Ausführungsform der Erfindung;
- Figur 3: zeigt eine Prinzipskizze des Druckluftversorgungssystems gemäß Figur 2;
- Figur 4: zeigt eine detaillierte Prinzipskizze eines Druckluftversorgungssystems gemäß einer dritten Ausführungsform der Erfindung.

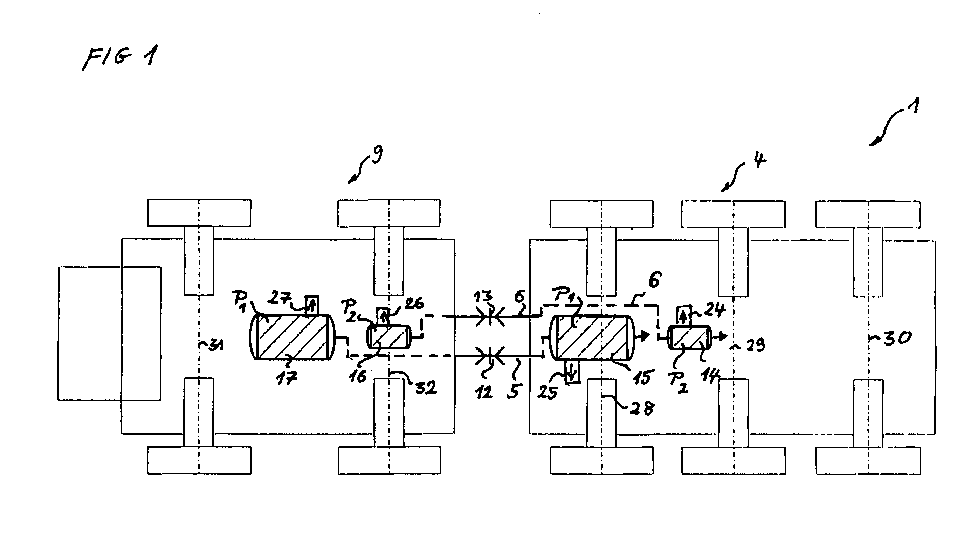

Figur 1 zeigt eine Prinzipskizze eines Druckluftversorgungssystems 1 gemäß einer ersten Ausführungsform der Erfindung. Das Druckluftversorgungssystem 1 ist für ein Zugfahrzeug 9 mit Lastkraftwagenanhänger 4 ausgelegt. In diesem Ausführungsbeispiel weist der Lastkraftwagenanhänger 4 drei Achsen 28, 29 und 30 auf und kann als Auflageanhänger auf dem Zugfahrzeug 9 mit den beiden Achsen 31 und 32 aufliegen.

Das Zugfahrzeug 9 erzeugt mit seinem Motor und einem damit gekoppelten Kompressor einen auf 8,5 bar bzw. 0,85 MPa begrenzten Luftdruck P₁, der in einem Druckluftspeicher 17 gespeichert ist, wobei ein Überdruckventil 27 anspricht, sobald der begrenzte Luftdruck P₁ überschritten wird. Weiterhin wird in dem Zugfahrzeug 9 ein höherer Luftdruck P₂ erzeugt und in dem Druckluftspeicher 16 gespeichert, der durch ein Überdruckventil 26 abgesichert ist.

Die beiden Druckluftspeicher 16 und 17 versorgen entsprechend ein erstes und ein zweites Druckluftnetz 5 bzw. 6 für das Zugfahrzeug und übertragen den Luftdruck dieser Druckluftnetze über eine erste Druckluftkupplung 12 an einen entsprechenden Druckluftspeicher 15 des Lastkraftwagenanhängers 4, der den begrenzten Luftdruck P₁ speichert und über ein Überdruckventil 25 geschützt ist. Über eine zweite Druckluftkupplung 13 wird der höhere Luftdruck P₂ in das zweite Druckluftnetz 6 eingespeist und in einem entsprechenden Druckluftspeicher 14 im Lastkraftwagenanhänger gespeichert, wobei der Druckluftbehälter 14 ein Überdruckventil 24 als Schutzventil aufweist. Mit Hilfe der beiden Druckluftkupplungen 12 und 13 und den beiden Druckluftspeichern 14 und 15 kann eine Versorgung eines ersten Druckluftnetzes 5 für den ersten Luftdruck P₁ und eines zweiten Druckluftnetzes 6 für den höheren Luftdruck P₂ im Lastkraftwagenanhänger vorgesehen werden.

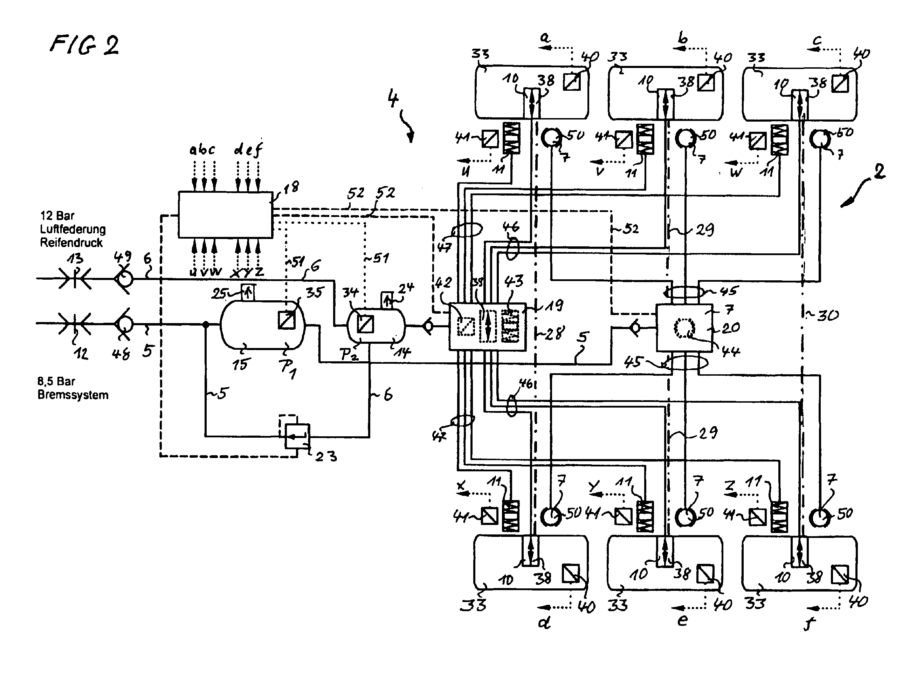

Figur 2 zeigt eine detaillierte Prinzipskizze eines Druckluftversorgungssystems 2 gemäß einer zweiten Ausführungsform der Erfindung. Die Druckluftversorgung ist in dieser Ausführungsform der Erfindung auf zwei Druckluftkupplungen 12 und 13 zwischen einem hier nicht gezeigten Zugfahrzeug und einem Lastkraftwagenanhänger 4 aufgeteilt, wobei eine Druckluftkupplung 12 bis zu einem Luftdruck von 8,5 bar bzw. 0,85 MPa für das Bremssystem 7 des Lastkraftwagenanhängers 4 ausgelegt ist. In dieser Ausführungsform der Erfindung wird der begrenzte Luftdruck P₁ über ein Rückschlagventil 48 einem Druckluftspeicher 15 zugeführt. Wie bereits in Figur 1 gezeigt, weist der Druckluftspeicher 15 ein Überdruckventil 25 auf, das den Luftdruck P₁ in dem Druckluftspeicher 15 auf die 8,5 bar begrenzt.

Außerdem weist der Druckluftspeicher 15 einen Drucksensor 35 auf, der den aktuellen Druck an eine zentrale Steuereinrichtung 18 über eine mit einer punktierten Linie dargestellte Signalleitung 51 leitet. Dieser Druckluftspeicher 15 für den begrenzten Luftdruck P₁ versorgt ein erstes Druckluftnetz 5, das über eine Druckverteilungsvorrichtung 20 das Bremssystem 7 für die Räder 33 des Lastkraftwagenanhängers 4 über die Druckluftleitungen 45 versorgt. Dazu steht die Druckverteilervorrichtung 20, die mit dem begrenzten Druck arbeitet, mit der zentralen Steuereinrichtung 18 über mindestens eine Steuerleitung 52 in Verbindung. Die Druckverteilervorrichtung 20 kann einen zentralen Drucksensor 44 aufweisen, der den begrenzten Luftdruck überwacht und der zentralen Steuereinrichtung 18 über mindestens eine entsprechende Signalleitung 51 signalisiert. Aus Sicherheitsgründen sind die Radbremsen 50 blockiert bzw. angezogen, wenn kein Druck über die Druckluftleitungen 45 anliegt. Durch eine Druckaufnahme von bis zu 8,5 bar bzw. 0,85 MPa werden die Radbremsen 50 gelöst, so dass der Lastkraftwagenanhänger fahrbereit ist.

Ein derartig begrenzter Luftdruck P₁ für das Radbremssystem 7 reicht jedoch nicht aus, um ein Reifendruckregelsystem 10 zu versorgen. Um die Reifendruckregelventile 38 für die einzelnen Reifen 33 betätigen zu können, ist ein Luftdruck zwischen 9 und 15 bar bzw. 0,9 MPa und 1,5 MPa je nach Ausführung der Reifendruckregelventile 38 sowie der Reifenkonfiguration selbst von Vorteil. Dazu weist der Lastkraftwagenanhänger 4 ein zweites Druckluftnetz 6 auf, das über eine Druckluftkupplung 13 für einen höheren Druck P₂ von dem Zugfahrzeug versorgt wird. An diese Druckluftkupplung 13 für den höheren Druck schließt sich ein Rückschlagventil 49 an, über das ein Druckluftspeicher 14 im Lastkraftwagenanhänger 4 versorgt wird. Dieser Druckluftspeicher mit seinem Sensor 34 und dem Überdruckventil 24 entspricht dem Druckluftspeicher 14 der Figur 1.

Der Reifendruck in jedem einzelnen Reifen 33 kann mit Hilfe eines Drucksensors 40 gemessen und über die Signalleitungen a, b, c sowie d, e, f an eine zentrale Steuereinrichtung 18 über entsprechende Signalleitungen weitergegeben werden. Außerdem ist es möglich anstelle derartiger Drucksensoren 40 in den einzelnen Reifen 33, einen zentralen Drucksensor 42 in einer Druckverteilungsvorrichtung 19 für den höheren Luftdruck anzubringen. Dieser höhere Luftdruck wird den Reifendruckregelventilen 38 über entsprechende Druckluftleitungen 46 zugeführt.

Neben den hier gezeigten Möglichkeiten der Sensoren für jeden einzelnen Reifen 33 oder eines zentralen Reifendrucksensors 42 besteht auch die Möglichkeit, dass achsweise für jede der Achsen 28, 29 und 30 der Reifendruck erfasst wird und über eine entsprechende Druckverteilungsvorrichtung den Reifen 33 einer jeden Achse 28, 29 bzw. 30 zugeführt wird. Anstelle der auf die Räder 33 verteilten Reifendruckregelventile 38 kann in der Druckverteilervorrichtung 19 für den erhöhten Luftdruck ein zentrales Reifendruckregelventil 39 angeschlossen sein, so dass alle Räder während des Betriebs über dieses zentrale Reifendruckregelventil 39 versorgt werden. Ferner ist es möglich, achsweise für jede Achse 28, 29 und 30 ein entsprechendes hier nicht gezeigtes Reifendruckregelventil vorzusehen, das in seiner Bauweise und Funktionsweise dem zentralen Reifendruckregelventil 39 entspricht.

Aufgrund dieses zweiten Druckluftnetzes 6 des Lastkraftwagenanhängers 4 ist es zusätzlich möglich, neben der Versorgung des Reifendruckregelsystems 10 auch ein Feder- und Dämpfungssystem 11 mit dem höheren Luftdruck P₂ über das zweite Druckluftnetz 6 zu versorgen. Dazu weist die Druckverteilervorrichtung weitere Druckluftleitungen 47 auf, die das Feder- und Dämpfungssystem 11 mit einem höheren Luftdruck versorgen. Dieses hat, wie oben bereits erwähnt, den Vorteil, dass die Druckluftfedern bzw. Druckluftdämpfungskomponenten kompakter und Gewicht sparender ausgeführt werden können.

Der Druck in dem Feder- und Dämpfungssystem 11 wird mit Hilfe der Drucksensoren 41 gemessen und über die Sensorleitungen u, v, w, sowie x, y, z an die zentrale Steuereinrichtung 18 übermittelt, so dass diese Steuereinrichtung 18 individuell jede einzelne pneumatische Feder mit unterschiedlich angepasstem Luftdruck versorgen kann. Ferner zeigt Figur 2 eine Möglichkeit über einen Bypass sowie über ein Regelventil 23 den Druckluftspeicher 15 mit einem begrenzten Luftdruck P₁ zu versorgen, falls der Sensor 35 anzeigt, dass der Luftdruck P₁ unter einen noch zulässigen Schwellwert gefallen ist.

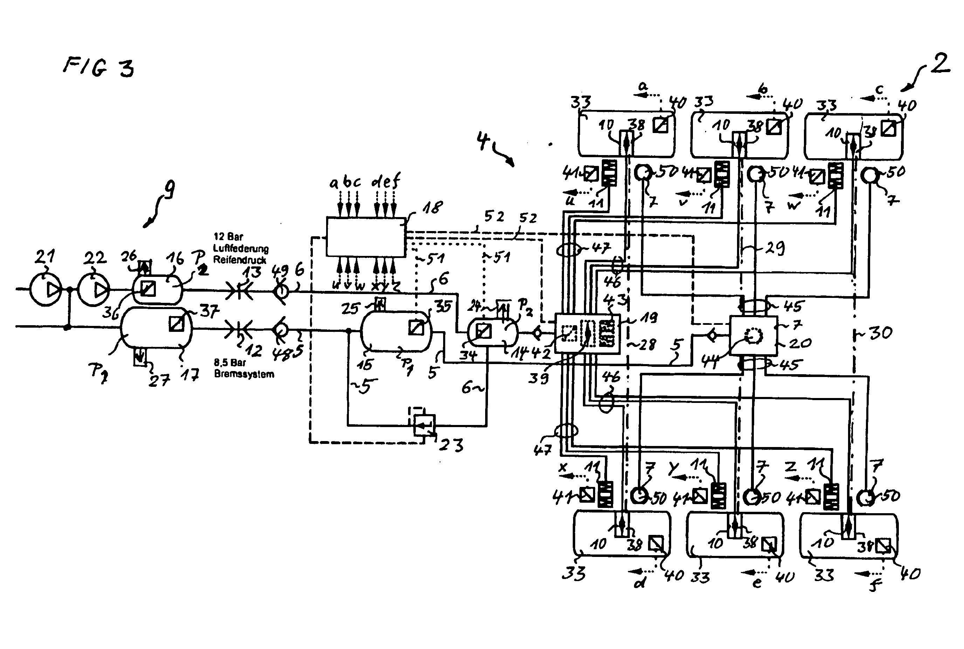

Figur 3 zeigt eine Prinzipskizze des Druckluftversorgungssystems 2 gemäß Figur 2, wobei Komponenten mit gleichen Funktionen wie in Figur 2 mit gleichen Bezugszeichen gekennzeichnet und nicht extra erörtert werden. Die Ergänzung gegenüber den Figuren 1 und 2 besteht darin, dass der Aufbau des Druckversorgungssystems 2 in dem Zugfahrzeug 9 mit zwei in Serie geschalteten Kompressoren 21 und 22 ausgestattet ist. Davon kann der Kompressor 22 eine Booster-Pumpe sein, die von dem niedrigeren Luftdruck P₁, der durch den Kompressor 21 erzeugt wird, angetrieben wird und einen höheren Luftdruck P₂ erzeugt.

Der begrenzte Luftdruck P₁ des Kompressors 21 wird in dieser Ausführungsform der Erfindung in dem Zugfahrzeug 9 einem Druckspeicher 17 zugeführt, der von einem Sensor 37 überwacht wird und durch ein Überdruckventil 17 auf 8,5 bar bzw. 0,85 MPa begrenzt wird. Der Kompressor 22 beispielsweise in Form einer Booster-Pumpe arbeitet mit diesem verminderten Luftdruck P₁ und erzeugt einen darüber liegenden Luftdruck P₂ beispielsweise zwischen 0,9 und 1,5 MPa, der in dem Druckspeicher 16 gespeichert wird und von einem Sensor 36 überwacht wird, wobei ein Überdruckventil 26 den Druckspeicher 16 und das zweite Druckluftnetz 6 vor Überlastung schützt.

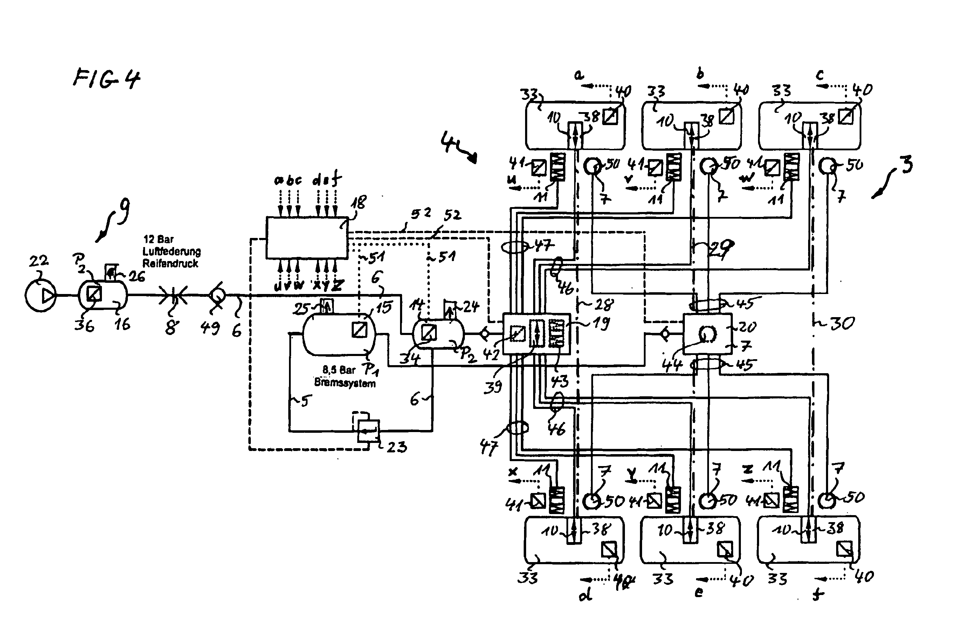

Figur 4 zeigt eine detaillierte Prinzipskizze eines Druckluftversorgungssystems 3 gemäß einer dritten Ausführungsform der Erfindung. Komponenten mit gleichen Funktionen wie in den vorhergehenden Figuren werden mit den gleichen Bezugszeichen gekennzeichnet und nicht extra erörtert. Der Unterschied zu den vorhergehenden Figuren besteht darin, dass das Zugfahrzeug nur einen Kompressor 22 aufweist, der bereits einen höheren Luftdruck P₂ erzeugt. Dieser höhere Luftdruck P₂ wird über eine einzige Druckluftkupplung 13 zwischen dem Zugfahrzeug 9 und dem Lastkraftwagenanhänger 4, ohne dass eine zweite Druckluftkupplung für den begrenzten Luftdruck P₁ erforderlich ist, in das zweite Druckluftnetz 6 des Lastkraftwagenanhängers 4 über ein Rückschlagventil 49 eingespeist.

In dem Lastkraftwagenanhänger 4 wird der höhere Luftdruck P₂ in dem Druckluftspeicher 14 des zweiten Druckluftnetzes 6 gespeichert. Der begrenzte Luftdruck P₁ für das Druckluftnetz 5 wird mit Hilfe eines Druckregelventils 23 aus dem Druckluftspeicher 14 abgezweigt und einem Druckluftspeicher 15 für den begrenzten Luftdruck P₁ zugeführt. Dieser Druckluftspeicher 15 versorgt dann das erste Druckluftnetz 5 mit begrenztem Luftdruck P₁ für das Bremssystem 7. Zu dem ersten Druckluftnetz 5 gehören auch die Druckluftleitungen 45, die von der Druckverteilervorrichtung 20 für das Bremssystem 7 ausgehen.

Für ein derartiges Druckluftversorgungssystem 1 bis 3 wäre es vorteilhaft, wenn für eine Druckluftversorgungskupplung zwischen einem Zugfahrzeug 9 und einem Lastkraftwagenanhänger 4 eine entsprechend neue Kupplungsnorm oder ein entsprechend neuer Kupplungsstandard EU-weit und/oder weltweit vereinbart wird. Dieses hätte den Vorteil, dass sowohl die zusätzlichen üblichen Komponenten für Zusatzfunktionen des Lastkraftwagenanhängers 4 als auch erhebliches Gewicht in dem Lastkraftwagenanhänger 4 sowie in dem Zugfahrzeug 9 eingespart werden könnten.

### Bezugszeichenliste

| | |
|---|---|
| 1 | Druckluftversorgungssystem (1. Ausführungsform) |
| 2 | Druckluftversorgungssystem (2. Ausführungsform) |
| 3 | Druckluftversorgungssystem (3. Ausführungsform) |
| 4 | Lastkraftwagenanhänger |
| 5 | erstes Druckluftnetz |
| 6 | zweites Druckluftnetz |
| 7 | pneumatische Bremsanlage |
| 8 | Druckluftversorgungskupplung |
| 9 | Zugfahrzeug |
| 10 | Reifendruckregelsystem |
| 11 | pneumatisches Feder- und Dämpfungssystem |
| 12 | erste Druckluftkupplung |
| 13 | zweite Druckluftkupplung |
| 14 | Druckluftspeicher (Hochdruck, Anhänger) |
| 15 | Druckluftspeicher (Niederdruck, Anhänger) |
| 16 | Druckluftspeicher (Hochdruck, Zugfahrzeug) |
| 17 | Druckluftspeicher (Niederdruck, Zugfahrzeug) |
| 18 | zentrale Steuereinrichtung |
| 19 | Druckverteilervorrichtung (Hochdruck) |
| 20 | Druckverteilervorrichtung (Niederdruck) |
| 21 | Niederdruckkompressor (Zugmaschine) |
| 22 | Hochdruckkompressor (Zugmaschine) |
| 23 | Druckregelventil |
| 24 | Überdruckventil des Druckluftspeichers 14 |
| 25 | Überdruckventil des Druckluftspeichers 15 |
| 26 | Überdruckventil des Druckluftspeichers 16 |
| 27 | Überdruckventil des Druckluftspeichers 17 |
| 28 | Achse des Anhängers |
| 29 | Achse des Anhängers |
| 30 | Achse des Anhängers |
| 31 | Achse der Zugmaschine |
| 32 | Achse der Zugmaschine |
| 33 | Reifen des Anhängers |
| 34 | Drucksensor des Druckspeichers 14 |
| 35 | Drucksensor des Druckspeichers 15 |
| 36 | Drucksensor des Druckspeichers 16 |
| 37 | Drucksensor des Druckspeichers 17 |
| 38 | Reifendruckregelventil |
| 39 | zentrales Reifendruckregelventil |
| 40 | Drucksensoren der Reifen |
| 41 | Drucksensoren der Druckluftfedern bzw. der Druckluftdämpfungen |
| 42 | zentraler Drucksensor der Reifen |
| 43 | zentraler Drucksensor des Federdrucksystems |
| 44 | zentraler Drucksensor der Bremse |
| 45 | Druckluftleitung (Bremssystem) |
| 46 | Druckluftleitung (Reifendruckregelung) |
| 47 | Druckluftleitung (Federdruckregelsystem) |
| 48 | Rückschlagventil |
| 49 | Rückschlagventil |
| 50 | Radbremse |
| 51 | Signalleitung |
| 52 | Steuerleitung |

| | |
|---|---|
| P₁ | EU-weiter begrenzter Luftdruck für Lastkraftwagenanhänger |
| P₂ | höherer Luftdruck |

## Patentansprüche

1. Druckluftversorgungssystem für Lastkraftwagenanhänger (4) aufweisend:
- zumindest ein erstes Druckluftnetz (5), das eine pneumatische Bremsanlage (7) des Lastkraftwagenanhängers (4) mit einem gemäß EU-weiter gesetzlicher Bestimmungen begrenzten Luftdruck (P₁) versorgt,
- mindestens eine Druckluftversorgungskupplung (8) zwischen Zugfahrzeug (9) und dem Lastkraftwagenanhänger (4) zur Druckluftversorgung,
wobei die mindestens eine Druckluftversorgungskupplung (8) für einen höheren Luftdruck (P₂) ausgelegt ist als der begrenzte Luftdruck (P₁) gemäß der EU-weiten gesetzlichen Bestimmungen,
wobei der begrenzte Luftdruck (P₁) für Lastkraftwagenanhänger (4) 8,5 bar aufweist und die mindestens eine Druckluftversorgungskupplung (8) für einen höheren Luftdruck (P₂) von bis zu 15 bar vorzugsweise bis zu 12 bar ausgelegt ist,
der Lastkraftwagenanhänger (4) neben dem ersten Druckluftnetz (5) ein zweites Druckluftnetz (6) für den höheren Luftdruck (P₂) aufweist,
und an das zweite Druckluftnetz (6) des Lastkraftwagenanhängers (4) ein Reifendruckregelsystem (10) und ein pneumatisches Feder- und Dämpfungssystem (11) angeschlossen ist.

2. Druckluftversorgungssystem nach Anspruch 1,
**dadurch gekennzeichnet, dass**
zwischen dem Zugfahrzeug (9) und dem Lastkraftwagenanhänger (4) eine erste Druckluftkupplung (12) mit einer ersten Luftdruckbegrenzung zur Versorgung des ersten Druckluftnetzes (5) des Lastkraftwagenanhängers (4) und eine zweite Druckluftkupplung (13) mit einer zweiten höheren Luftdruckbegrenzung zur Versorgung des zweiten Druckluftnetzes (6) des Lastkraftwagenanhängers (4) angeordnet ist.

3. Druckluftversorgungssystem nach einem der Ansprüche 1 oder 2,
**dadurch gekennzeichnet, das**
das erste Druckluftnetz (5) des Lastkraftwagenanhängers (4) aus dem zweiten Druckluftnetz (6) versorgt wird und eine einzige Druckluftversorgungskupplung (8), die für den höheren Luftdruck (P₂) ausgelegt ist als der begrenzte Luftdruck (P₁) gemäß der EU-weiten Bestimmungen, beide Druckluftnetze (5, 6) des Lastkraftwagenanhängers (4) versorgt.

4. Druckluftversorgungssystem nach einem der Ansprüche 1 bis 3,
**dadurch gekennzeichnet, dass**
der Lastkraftwagenanhänger (4) für die Druckluftnetze (5, 6) mindestens einen Druckluftspeicher (14) aufweist, der für den höheren Luftdruck (P₂) ausgelegt ist als der begrenzte Luftdruck (P₁) gemäß der EU-weiten Bestimmungen und beide Druckluftnetze (5, 6) des Lastkraftwagenanhängers (4) versorgt.

5. Druckluftversorgungssystem nach einem der Ansprüche 1 bis 4,
**dadurch gekennzeichnet, dass**
die Druckluftnetze (5, 6) des Lastkraftwagenanhängers (4) mit einer zentralen Steuereinrichtung (18) zusammenwirken.

6. Druckluftversorgungssystem nach einem der Ansprüche 1 bis 5,
**dadurch gekennzeichnet, dass**
die Druckluftnetze (5, 6) getrennte Druckverteilervorrichtungen (19, 20) aufweisen.

7. Druckluftversorgungsverfahren für Lastkraftwagenanhänger (4), das nachfolgende Verfahrenschritte aufweist:
- Erzeugen eines Luftdruckes (P₂) im Zugfahrzeug (9), der höher ist als ein begrenzter Luftdruck (P₁) gemäß EU-weiter gesetzlichen Bestimmungen für Lastkraftwagenanhänger (4);
- Überführen des höheren Luftdrucks (P₂) über mindestens eine Druckluftversorgungskupplung (8), die für einen höheren Luftdruck (P₂) als der begrenzte Luftdruck (P₁) gemäß EU-weiter gesetzlichen Bestimmungen ausgelegt wird;
- Versorgen eines ersten Druckluftnetzes (5) in dem Lastkraftwagenanhänger (4) mit einem EU-weit zugelassenen Luftdruck (P₁) und eines zweiten Druckluftnetzes (6) mit einem höheren Luftdruck (P₂) über die mindestens eine Druckluftversorgungskupplung (8), wobei neben der Versorgung des ersten Druckluftnetzes (5) des Lastkraftwagenanhängers (4) ein zweites Druckluftnetz (6) mit dem höheren Luftdruck (P₂) versorgt wird, und
an das zweite Druckluftnetz (6) des Lastkraftwagenanhängers (4) ein Reifendruckregelsystem (10) und ein pneumatisches Feder- und Dämpfungssystem (11) angeschlossen wird.

8. Druckluftversorgungsverfahren nach Anspruch 7,
**dadurch gekennzeichnet, dass**
der begrenzte Luftdruck (P₁) für Lastkraftwagenanhänger (4) auf 8,5 bar begrenzt wird und die mindestens eine Druckluftversorgungskupplung (8) für den höheren Luftdruck (P₂) von bis zu 15 bar, vorzugsweise bis zu 12 bar ausgelegt wird.

9. Druckluftversorgungsverfahren nach Anspruch 7,
**dadurch gekennzeichnet, dass**
zwischen dem Zugfahrzeug (9) und dem Lastkraftwagenanhänger (4) eine erste Druckluftkupplung (12) mit einer ersten Luftdruckbegrenzung zur Versorgung des ersten Druckluftnetzes (5) des Lastkraftwagenanhängers (4) und eine zweite Druckluftkupplung (13) mit einer zweiten höheren Luftdruckbegrenzung zur Versorgung des zweiten Druckluftnetzes (6) des Lastkraftwagenanhängers (4) angeordnet wird.

10. Druckluftversorgungsverfahren nach Anspruch 7 oder 9,
**dadurch gekennzeichnet, das**
das erste Druckluftnetz (5) des Lastkraftwagenanhängers (4) aus dem zweiten Druckluftnetz (6) versorgt wird und eine einzige Druckluftversorgungskupplung (8), die für den höheren Luftdruck (P₂) ausgelegt wird als der begrenzte Luftdruck (P₁) gemäß der EU-weiten Bestimmungen, beide Druckluftnetze (5, 6) des Lastkraftwagenanhängers (4) versorgt.

11. Druckluftversorgungsverfahren nach einem der Ansprüche 7, 9 oder 10,
**dadurch gekennzeichnet, dass**
mindestens in einem Druckluftspeicher (14), der für den höheren Luftdruck (P₂) ausgelegt wird als der begrenzte Luftdruck (P₁) gemäß der EU-weiten Bestimmungen, Druckluft für die Druckluftnetze (5, 6) des Lastkraftwagenanhängers (4) gespeichert wird und beide Druckluftnetze (5, 6) des Lastkraftwagenanhängers (4) aus dem einen Druckluftspeicher (14) versorgt werden.

12. Druckluftversorgungsverfahren nach einem der Ansprüche 7 oder 9 bis 11,
**dadurch gekennzeichnet, dass**
eine zentrale Steuereinrichtung (18) die Druckluftnetze (5, 6) des Lastkraftwagenanhängers (4) steuert.

13. Druckluftversorgungsverfahren nach einem der Ansprüche 7 oder 9 bis 12,
**dadurch gekennzeichnet, dass**
die Druckluftnetze (5, 6) über getrennte Druckverteilervorrichtungen (19, 20) mit Druckluft versorgt werden.

## Claims

1. Compressed-air supply system for truck trailers (4), comprising:
- at least a first compressed-air network (5) that supplies a pneumatic brake system (7) of said truck trailer (4) with an air pressure level (P₁) restricted in compliance with EU-wide statutory regulations,
- at least one compressed-air supply coupler (8) between the tractor vehicle (9) and said truck trailer (4) for supply with compressed air,
wherein said at least one compressed-air supply coupler (8) is designed for an air pressure level (P₂) higher than said restricted air pressure level (P₁) in compliance with said EU-wide statutory regulations,
wherein said restricted air pressure level (P₁) for truck trailers (4) is 8.5 bar and said at least one compressed-air supply coupler (8) is designed for a higher air pressure level (P₂) of up to 15 bar, preferably up to 12 bar,
with said truck trailer (4) comprising a second compressed-air network (6) for said higher air pressure (P₂) in addition to said first compressed-air network (5),
and wherein a tyre pressure control system (10) and a pneumatic spring and damper system (11) are connected to said second compressed-air network (6) of said truck trailer (4).

2. Compressed-air supply system according to Claim 1,
**characterized in that**
a first compressed-air coupler (12) with a first air pressure limiting function for supply of said first compressed-air network (5) of said truck trailer (4) and a second compressed-air coupler (13) with a second higher compressed-air pressure level limiting function for the supply of said second compressed-air network (6) of said truck trailer are disposed between said tractor vehicle (9) and said truck trailer (4).

3. Compressed-air supply system according to any of the Claims 1 or 2,
**characterized in that**
said first compressed-air network (5) is supplied from said second compressed-air network (6) and that a single compressed-air supply coupler (8), which is designed for said air pressure level (P₂) higher than said restricted air pressure level (P₁) in compliance with said EU-wide regulations, supplies both compressed-air networks (5, 6) of said truck trailer (4).

4. Compressed-air supply system (1) according to any of the Claims 1 to 3,
**characterized in that**
said truck trailer (4) comprises at least one compressed air reservoir (14) for said compressed air networks (5, 6), which is designed for said air pressure level (P₂) higher than said restricted air pressure level (P₁) in compliance with said EU-wide regulations, and which supplies both compressed-air networks (5, 6) of said truck trailer (4).

5. Compressed-air supply system (1) according to any of the Claims 1 to 4,
**characterized in that**
said compressed air networks (5, 6) of said truck trailer (4) interact with a central control means (18).

6. Compressed-air supply system (1) according to any of the Claims 1 to 5,
**characterized in that**
said compressed air networks (5, 6) include separate pressure distributor devices (19, 20).

7. Method of compressed-air supply for truck trailers (4), including the following steps:
- generating an air pressure (P₂) in said tractor vehicle (9) that is higher than an air pressure level (P₁) restricted in compliance with EU-wide statutory regulations governing truck trailers (4);
- transfer of said higher air pressure level (P₂) via at least one compressed air supply coupler (8) that is designed for an air pressure level (P₂) higher than said air pressure level (P₁) restricted in compliance with EU-wide statutory regulations;
- supplying a first compressed air network (5) in said truck trailer (4) with an air pressure (P₁) permitted EU-wide and a second compressed air network (6) with a higher air pressure (P₂) via said at least one compressed air supply coupler (8),
wherein a second compressed air network (6) is supplied with said higher air pressure (P₂) in addition to the supply of said first compressed air network (5) of said truck trailer, and
wherein a tyre pressure regulator system (10) and a pneumatic spring and dampening system (11) are connected to said second compressed air network (6) of said truck trailer (4).

8. Method of compressed-air supply according to Claim 7,
**characterized in that**
said restricted air pressure level (P₁) for truck trailers (4) is restricted to 8.5 bar and that said at least one compressed air supply coupler (8) is designed for said higher air pressure level (P₂) of up to 15 bar, preferably up to 12 bar.

9. Method of compressed-air supply according to Claim 7,
**characterized in that**
a first compressed air coupler with a first air pressure limiting function for the supply of said first compressed air network (5) of said truck trailer (4) and a second compressed air coupler (13) with a second higher air pressure restricting function for the supply of said second compressed air network (6) of said truck trailer (4) are arranged between said tractor vehicle (9) and said truck trailer (4).

10. Method of compressed-air supply according to Claim 7 or 9,
**characterized in that**
said first compressed air network (5) of said truck trailer (4) is supplied from said second compressed air network (6) and that a single compressed air supply coupler (8), which is designed for said air pressure level (P₂) higher than said restricted air pressure level (P₁) in compliance with said EU-wide regulations, supplies both compressed air networks (5, 6) of said truck trailer (4).

11. Method of compressed-air supply according to any of the Claims 7, 9 or 10,
**characterized in that**
compressed air is stored for said compressed air networks (5, 6) of said truck trailer (4) at least in a compressed air reservoir (14) that is designed for the air pressure level (P₂) higher than said restricted air pressure level (P₁) in compliance with said EU-wide regulations, and that both compressed air networks (5, 6) of said truck trailer (4) are supplied from said single compressed air reservoir (14).

12. Method of compressed-air supply according to any of the Claims 7 or 9 to 11,
**characterized in that**
a central control means (18) controls said compressed air networks (5, 6) of said truck trailer (4).

13. Method of compressed-air supply according to any of the Claims 7 or 9 to 12,
**characterized in that**
said compressed air networks (5, 6) are supplied with compressed air via separate pressure distributor devices (19, 20).

## Revendications

1. Système d'alimentation en air comprimé de remorque (4) de camion comportant :
- au moins un premier réseau (5) d'air comprimé, qui alimente un système (7) de freinage pneumatique de la remorque (4) du camion en une pression (P₁) d'air limitée suivant les prescriptions légales européennes,
- au moins un accouplement (8) d'alimentation en air comprimé entre le véhicule (9) de traction et la remorque (4) du camion pour l'alimentation en air comprimé,
dans lequel le au moins un accouplement (8) d'alimentation en air comprimé est conçu pour une pression (P₂) d'air plus grande que la pression (P₁) d'air limité suivant les prescriptions légales européennes,
dans lequel la pression (P₁) d'air limitée pour des remorques (4) de camion est de 8,5 bar et le au moins un accouplement (8) d'alimentation en air comprimé est conçu pour une pression (P₂) d'air plus grande allant jusqu'à 15 bar, de préférence jusqu'à 12 bar,
la remorque (4) du camion a, outre le premier réseau (5) d'air comprimé, un deuxième réseau (6) d'air comprimé pour la pression (P₂) d'air plus grande,
et au deuxième réseau (6) d'air comprimé de la remorque (4) du camion se raccorde un système (10) de régulation de la pression des pneumatiques et un système (11) pneumatique de suspension et d'amortissement.

2. Système d'alimentation en air comprimé suivant la revendication 1,
**caractérisé en ce que**
entre le véhicule (9) de traction et la remorque (4) du camion est monté un premier accouplement (12) pour de l'air comprimé ayant une première limitation de la pression de l'air pour l'alimentation du premier réseau (5) d'air comprimé de la remorque (4) du camion et un deuxième accouplement (13) pour de l'air comprimé ayant une deuxième limitation plus grande de l'air comprimé pour l'alimentation du deuxième réseau (6) d'air comprimé de la remorque (4) du camion.

3. Système d'alimentation en air comprimé suivant l'une des revendications 1 ou 2,
**caractérisé en ce que**
le premier réseau (5) d'air comprimé de la remorque (4) du camion est alimenté à partir du deuxième réseau (6) d'air comprimé et un accouplement (8) unique d'alimentation en air comprimé, qui est conçu pour une pression (P₂) d'air plus grande que la pression (P₁) d'air limitée suivant les prescriptions légales européennes, alimente les deux réseaux (5, 6) d'air comprimé de la remorque (4) du camion.

4. Système d'alimentation en air comprimé suivant l'une des revendications 1 à 3,
**caractérisé en ce que**
la remorque (4) du camion a pour les réseaux (5, 6) d'air comprimé au moins un accumulateur (14) d'air comprimé, qui est conçu pour la pression (P₂) d'air plus grande que la pression (P₁) d'air limitée suivant les prescriptions légales européennes et qui alimente les deux réseaux (5, 6) d'air comprimé de la remorque (4) du camion.

5. Système d'alimentation en air comprimé suivant l'une des revendications 1 à 4,
**caractérisé en ce que** les réseaux (5, 6) d'air comprimé de la remorque (4) du camion coopèrent avec un dispositif (18) central de commande.

6. Système d'alimentation en air comprimé suivant l'une des revendications 1 à 5,
**caractérisé en ce que** les réseaux (5, 6) d'air comprimé ont des dispositifs (19, 20) distincts de répartition de la pression.

7. Procédé d'alimentation en air comprimé de remorques (4) de camion, qui a les stades de procédé suivantes :
- production d'une pression (P₂) d'air dans le véhicule (9) de traction, qui est plus grande qu'une pression (P₁) d'air limitée suivant les prescriptions légales européennes pour des remorques (4) de camion;
- transfert de la pression (P₂) d'air plus grande par au moins un accouplement (8) d'alimentation en air comprimé, qui est conçu pour une pression (P₂) d'air plus grande que la pression (P₁) d'air limitée suivant les prescriptions légales européennes;
- alimentation d'un premier réseau (5) d'air comprimé dans la remorque (4) du camion en une pression (P₁) d'air autorisée suivant les prescriptions légales européennes et d'un deuxième réseau (6) d'air comprimé ayant une pression (P₂) d'air plus grande par le au moins un accouplement (8) d'alimentation en air comprimé, dans lequel, outre l'alimentation du premier réseau (5) d'air comprimé de la remorque (4) du camion, un deuxième réseau (6) d'air comprimé est alimenté en la pression (P₂) d'air plus grande, et
et au deuxième réseau (6) d'air comprimé de la remorque (4) du camion se raccorde un système (10) de régulation de la pression des pneumatiques et un système (11) pneumatique de suspension et d'amortissement.

8. Procédé d'alimentation en air comprimé suivant la revendication 7,
**caractérisé en ce que**
la pression (P₁) d'air limitée pour des remorques (4) de camion est limitée à 8,5 bar et le au moins un accouplement (8) d'alimentation en air comprimé est conçu pour la pression (P₂) d'air plus grande allant jusqu'à 15 bar, de préférence jusqu'à 12 bar.

9. Procédé d'alimentation en air comprimé suivant la revendication 7,
**caractérisé en ce que**
entre le véhicule (9) de traction et la remorque (4) du camion est monté un premier accouplement (12) pour de l'air comprimé ayant une première limitation de la pression de l'air pour l'alimentation du premier réseau (5) d'air comprimé de la remorque (4) du camion et un deuxième accouplement (13) pour de l'air comprimé ayant une deuxième limitation plus grande de l'air comprimé pour l'alimentation du deuxième réseau (6) d'air comprimé de la remorque (4) du camion.

10. Procédé d'alimentation en air comprimé suivant la revendication 7 ou 9,
**caractérisé en ce que**
le premier réseau (5) d'air comprimé de la remorque (4) du camion est alimenté à partir du deuxième réseau (6) d'air comprimé et un accouplement (8) unique d'alimentation en air comprimé, qui est conçu pour une pression (P₂) d'air plus grande que la pression (P₁) d'air limitée suivant les prescriptions légales européennes, alimente les deux réseaux (5, 6) d'air comprimé de la remorque (4) du camion.

11. Procédé d'alimentation en air comprimé suivant l'une des revendications 7, 9 ou 10,
**caractérisé en ce que**
l'on accumule dans au moins un accumulateur (14) d'air comprimé, qui est conçu pour la pression (P₂) d'air plus grande que la pression (P₁) d'air limitée, suivant les prescriptions légales européennes, de l'air comprimé pour les réseaux (5, 6) d'air comprimé de la remorque (4) du camion et on alimente les deux réseaux (5, 6) d'air comprimé de la remorque (4) du camion à partir de l'accumulateur (14) d'air comprimé.

12. Procédé d'alimentation en air comprimé suivant l'une des revendications 7 ou 9 à 11,
**caractérisé en ce que**
une unité (8) centrale de commande commande les réseaux (5, 6) d'air comprimé de la remorque (4) du camion.

13. Procédé d'alimentation en air comprimé suivant l'une des revendications 7 ou 9 à 12,
**caractérisé en ce que**
l'on alimente les réseaux (5, 6) d'air comprimé en air comprimé par des dispositifs (19, 20) distincts de répartition de la pression.
